# EUROPEAN PATENT APPLICATION

(11) **EP 4 583 625 A2**
(43) Date of publication of application: **09.07.2025**
(21) Application number: 25178693.5
(22) Date of filing: 03.09.2020
(51) Int. Cl.: H04W 76/10

(54) **RADIO COMMUNICATION METHOD AND TERMINAL DEVICE**

(30) Priority: 21.05.2020 CN 202010438172
(62) Divisional of application: 20936143.5
(71) Applicant: GUANGDONG OPPO MOBILE TELECOMMUNICATIONS CORP., LTD., Dongguan, Guangdong 523860 (CN)
(72) Inventor: YOU, Xin, Dongguan, 523860 (CN); LI, Haitao, Dongguan, 523860 (CN)
(74) Representative: Mewburn Ellis LLP

(57) **Abstract**

The present disclosure provides a wireless communication method and a terminal device. The wireless communication method includes: receiving (S310), by a terminal device, a handover command that instructs the terminal device to be handed over from a source cell to a target cell in a Dual Active Protocol Stack (DAPS) handover mode; and performing (S320), by the terminal device when the terminal device suspends at least one Signaling Radio Bearer (SRB) of the source cell in accordance with the handover command, at least one of: instructing a Packet Data Convergence Protocol (PDCP) entity corresponding to the at least one SRB to suspend the PDCP entity, re-establishing a Radio Link Control (RLC) entity corresponding to the at least one SRB, and triggering a PDCP Service Data Unit (SDU) deletion process.

## Description

### TECHNICAL FIELD

The embodiments of the present disclosure relate to communication technology, and more particularly, to a wireless communication method and a terminal device.

### BACKGROUND

In New Radio (NR) and Long Term Evolution (LTE) systems, a Dual Active Protocol Stack (DAPS) is introduced to optimize a handover process to reduce interruption time during the handover process. However, it is not clear how to process Radio Resource Control (RRC) messages buffered in a source cell in a DAPS handover, which would affect the DAPS handover.

### SUMMARY

The present disclosure provides a wireless communication method and a terminal device. The terminal device deletes old RRC messages buffered in a source cell during a DAPS handover process, such that the terminal device can avoid transmitting unnecessary RRC messages when handed over back to the source cell after the DAPS handover fails.

In a first aspect, a wireless communication method is provided. The method includes: receiving, by a terminal device, a handover command that instructs the terminal device to be handed over from a source cell to a target cell in a Dual Active Protocol Stack (DAPS) handover mode; and performing, by the terminal device when the terminal device suspends at least one Signaling Radio Bearer (SRB) of the source cell in accordance with the handover command, at least one of: instructing a Packet Data Convergence Protocol (PDCP) entity corresponding to the at least one SRB to suspend the PDCP entity, re-establishing a Radio Link Control (RLC) entity corresponding to the at least one SRB, and triggering a PDCP Service Data Unit (SDU) deletion process.

In a second aspect, a wireless communication method is provided. The method includes: receiving, by a terminal device, a handover command that instructs the terminal device to be handed over from a source cell to a target cell in a Dual Active Protocol Stack (DAPS) handover mode; and performing, by the terminal device when the DAPS handover fails and no radio link failure in the source cell is detected, at least one of: instructing a Packet Data Convergence Protocol (PDCP) layer corresponding to at least one Signaling Radio Bearer (SRB) of the source cell to suspend a PDCP entity, re-establishing a Radio Link Control (RLC) entity corresponding to the at least one SRB of the source cell, and triggering a PDCP Service Data Unit (SDU) deletion process.

In a third aspect, a terminal device is provided. The terminal device is configured to perform the method according to the above first aspect or any implementation thereof.

In particular, the terminal device includes one or more functional modules configured to perform the method according to the above first aspect or any implementation thereof.

In a fourth aspect, a terminal device is provided. The terminal device is configured to perform the method according to the above second aspect or any implementation thereof.

In particular, the terminal device includes one or more functional modules configured to perform the method according to the above second aspect or any implementation thereof.

In a fifth aspect, a terminal device is provided. The terminal device includes a processor and a memory. The memory has a computer program stored thereon, and the processor is configured to invoke and execute the computer program stored in the memory to perform the method according to the above first aspect or any implementation thereof.

In a sixth aspect, a terminal device is provided. The terminal device includes a processor and a memory. The memory has a computer program stored thereon, and the processor is configured to invoke and execute the computer program stored in the memory to perform the method according to the above second aspect or any implementation thereof.

In a seventh aspect, an apparatus is provided. The apparatus is configured to perform the method according to the above first or second aspect or any implementation thereof.

In particular, the apparatus includes a processor configured to invoke and execute a computer program from a memory, to cause a device provided with the apparatus to perform the method according to the above first or second aspect or any implementation thereof.

In an eighth aspect, a computer-readable storage medium is provided. The computer-readable storage medium has a computer program stored thereon. The computer program causes a computer to perform the method according to the above first or second aspect or any implementation thereof.

In a ninth aspect, a computer program product is provided. The computer program product includes computer program instructions that cause a computer to perform the method according to the above first or second aspect or any implementation thereof.

In a tenth aspect, a computer program is provided. The computer program, when executed by a computer, causes the computer to perform the method according to the above first or second aspect or any implementation thereof.

With the above technical solutions, a terminal device deletes old RRC messages buffered in a source cell during a DAPS handover process, such that the terminal device can avoid transmitting unnecessary RRC messages when handed over back to the source cell after the DAPS handover fails.

### BRIEF DESCRIPTION OF DRAWINGS

FIG. 1 is a schematic diagram showing a communication system architecture according to an embodiment of the present disclosure.
FIG. 2 is a schematic flowchart illustrating a wireless communication method according to an embodiment of the present disclosure.
FIG. 3 is a schematic flowchart illustrating another wireless communication method according to an embodiment of the present disclosure.
FIG. 4 is a schematic block diagram of a terminal device according to an embodiment of the present disclosure.
FIG. 5 is a schematic block diagram of another terminal device according to an embodiment of the present disclosure.
FIG. 6 is a schematic block diagram of a communication device according to an embodiment of the present disclosure.
Fig. 7 is a schematic block diagram of an apparatus according to an embodiment of the present disclosure.
FIG. 8 is a schematic block diagram of a communication system according to an embodiment of the present disclosure.

### DESCRIPTION OF EMBODIMENTS

The technical solutions in the embodiments of the present disclosure will be described below with reference to the figure in the embodiments of the present disclosure. Obviously, the described embodiments are only some embodiments, rather than all embodiments, of the present disclosure. All other embodiments obtained by those skilled in the art based on the embodiments in the present disclosure without inventive efforts are to be encompassed by the scope of the present disclosure.

The solutions according to the embodiments of the present disclosure can be applied to various communication systems, including for example: Global System of Mobile Communication (GSM), Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolved NR system, LTE-based access to unlicensed spectrum (LTE-U) system, NR-based access to unlicensed spectrum (NR-U) system, Non-Terrestrial Network (NTN) system, Universal Mobile Telecommunication System (UMTS), Wireless Local Area Networks (WLAN), Wireless Fidelity (WiFi), the 5^{th} Generation (5G) system, or other communication systems.

Generally, traditional communication systems can support a limited number of connections and are easy to implement. However, with the development of communication technology, mobile communication systems will support not only traditional communication, but also e.g., Device to Device (D2D) communication, Machine to Machine (M2M) communication, and Machine Type Communication (MTC), Vehicle to Vehicle (V2V) communication, Vehicle to everything (V2X) communication, etc. The embodiments of the present disclosure can also be applied to these communication systems.

Optionally, the communication system of an embodiment of the present disclosure may be applied to a Carrier Aggregation (CA) scenario, a Dual Connectivity (DC) scenario, a Standalone (SA) network deployment scenario, and the like.

Optionally, the communication system of an embodiment of the present disclosure may be applied to unlicensed spectrum or shared spectrum. Alternatively, the communication system of an embodiment of the present disclosure may be applied to licensed spectrum or non-shared spectrum.

The embodiments of the present disclosure are described in conjunction with a network device and a terminal device. The terminal device may refer to a User Equipment (UE), an access terminal, a user unit, a user station, a mobile radio station, a mobile station, a remote station, a remote terminal, a mobile device, a user terminal, a terminal, a wireless communication device, a user agent, or a user device. The terminal device may be a station (ST) in a WLAN, a cellular phone, a cordless phone, a Session Initiation Protocol (SIP) phone, a Wireless Local Loop (WLL) station, a Personal Digital Assistant (PDA) device, a handheld device or a computing device having a wireless communication function, another processing device connected to a wireless modem, a vehicle-mounted device, a wearable device, a terminal device in the next generation communication system (e.g., NR network), or a terminal device in a future evolved Public Land Mobile Network (PLMN), etc.

In the embodiments of the present disclosure, the terminal device can be deployed on land, including indoor or outdoor, handheld, worn, or vehicle-mounted, deployed on water (e.g., on a ship), or deployed in the air (e.g., on an airplane, a balloon, a satellite, etc.).

In the embodiments of the present disclosure, the terminal device may be a mobile phone, a tablet computer (Pad), a computer with a wireless transceiver function, a Virtual Reality (VR) terminal device, an Augmented Reality (AR) terminal device, a wireless terminal in industrial control, a wireless terminal device in self driving, a wireless terminal device in remote medical, a wireless terminal device in smart grid, a wireless terminal device in transportation safety, a wireless terminal device in smart city, or a wireless terminal device in smart home.

As non-limiting examples, in an embodiment of the present disclosure, the terminal device may also be a wearable device. The wearable device, also known as wearable smart device, is a general term for wearable devices that are intelligently designed and developed from everyday wear, such as glasses, gloves, watches, clothes, and shoes, by applying wearable technologies. A wearable device is a portable device that can be directly worn on or integrated into a user's clothes or accessories. A wearable device is not only a kind of hardware device, but can also provide powerful functions based on software support, data interaction, and cloud interaction. In a broad sense, wearable smart devices may include full-featured, large-sized devices that can provide full or partial functions without relying on smart phones, such as smart watches or smart glasses, and devices that only focus on a certain type of application function and need to cooperate with other devices such as smart phones for use, such as various smart bracelets and smart jewelries for physical sign monitoring.

In an embodiment of the present disclosure, the network device may be a device communicating with mobile devices. The network device may be an Access Point (AP) in a WLAN, a base station such as Base Transceiver Station (BTS) in a GSM system or a CDMA system, a base station such as NodeB (NB) in a WCDMA system, a base station such as Evolutional Node (eNB or eNodeB) in an LTE system, or a relay station, an access point, a vehicle-mounted device, a wearable device, a network device or base station (e.g., gNB) in an NR network, a network device in a future evolved PLMN, or a network device in an NTN.

As a non-limiting example, in an embodiment of the present disclosure, the network device may have mobile characteristics, e.g., the network device may be a mobile device. Optionally, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, etc. Optionally, the network device may also be a base station provided in a location such as land or water.

In the embodiment of the present disclosure, the network device may provide services for a cell, and the terminal device may communicate with the network device over transmission resources, e.g., frequency domain resources or frequency spectral resources, used in the cell. The cell may be a cell corresponding to the network device (e.g., base station). The cell may belong to a macro base station or a base station corresponding to a small cell. The small cell here may include a metro cell, a micro cell, a pico cell, a femto cell, or the like. These small cells have characteristics such as small coverage and low transmission power, and are suitable for providing high-rate data transmission services.

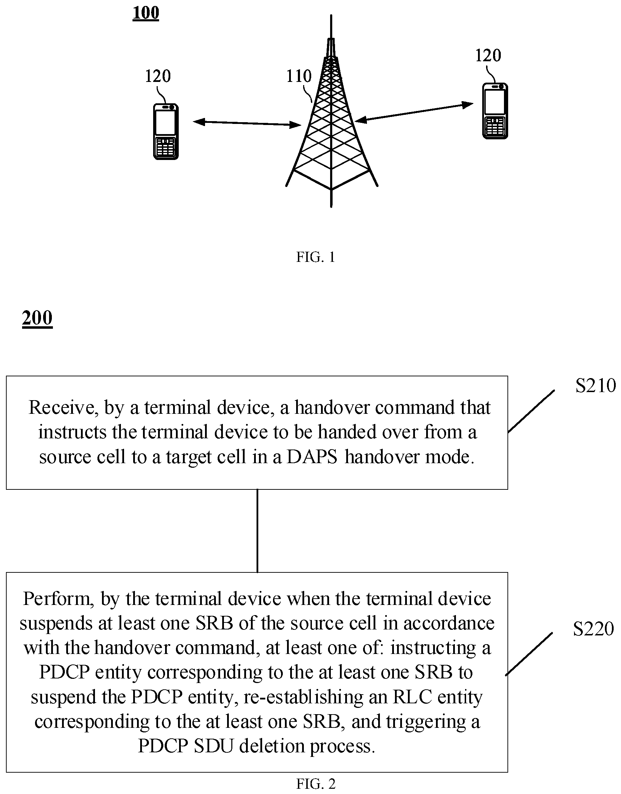

Exemplarily, a communication system 100 in which an embodiment of the present disclosure can be applied is schematically shown in FIG. 1. The communication system 100 may include a network device 110, which may be a device that communicates with a terminal device 120 (or referred to as a communication terminal or a terminal). The network device 110 may provide communication coverage for a particular geographic area, and may communicate with terminal devices located within the coverage.

FIG. 1 exemplarily shows one network device and two terminal devices. Alternatively, the communication system may include multiple network devices, and the coverage of each network device may include other numbers of terminal devices. The embodiment of the present disclosure is not limited to this.

Optionally, the communication system 100 may also include other network entities such as a network controller or a Mobility Management Entity (MME). The embodiment of the present disclosure is not limited to this.

It can be appreciated that, in the embodiments of the present disclosure, a device having a communication function in a network/system may be referred to as a communication device. Taking the communication system 100 shown in FIG. 1 as an example, the communication devices may include the network device 110 and the terminal devices 120 with a communication function. The network device 110 and the terminal device 120 may be the specific devices described above, and details thereof will be omitted here. The communication devices may also include other devices in the communication system 100, e.g., other network entities such as a network controller, an MME, etc., and the embodiment of the present disclosure is not limited to any of these examples.

In addition, the terms "system" and "network" may often be used interchangeably herein. The term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

It can be appreciated that the term "indication" as used in the embodiments of the present disclosure may be a direct indication, an indirect indication, or an association. For example, if A indicates B, it may mean that A directly indicates B, e.g., B can be obtained from A. Alternatively, it may mean that A indicates B indirectly, e.g., A indicates C and B can be obtained from C. Alternatively, it may mean that there is an association between A and B.

In the description of the embodiments of the present disclosure, the term "corresponding" may mean that there is a direct or indirect correspondence between the two, or may mean that there is an association between the two, or that they are in a relation of indicating and indicated, configuring or configured, or the like.

In the mobility enhancement related research in the 3rd Generation Partnership Project (3GPP), including LTE and NR, a DAPS optimization method for reducing interruption time during handover is proposed. The main idea is that during the handover, a terminal device maintains protocol stacks of both a source cell and a target cell. After receiving a DAPS handover command, the terminal device maintains a connection with the source cell and initiates a synchronization process/random access to the target cell. When the synchronization process/random access is completed, the terminal device will hand over uplink data, i.e., an uplink data transmission of the terminal device will be handed over from a source base station side to a target base station side after the random access. Release of the protocol stack of the source base station after the random access is based on an explicit indication from the network, i.e., during the period from the random access to the release of the connection on the source base station side, the terminal device can normally receive downlink data transmitted by the source cell and transmit uplink feedback related information for the downlink data and the like to the source cell.

For DAPS handover, during the period when the terminal device initiates random access to the target cell, the terminal device will keep monitoring the radio link of the source cell. If the link of the source cell fails, the terminal device will release the connection with the source cell and stop data transmission and reception with the source cell. In addition, if the DAPS handover fails, the terminal device fails to access the target cell, and no radio link failure occurs in the source cell, the terminal device can switch back to the connection with the source cell, thereby avoiding an RRC connection re-establishment process due to the handover failure.

It is to be noted that, in the DAPS handover process, it is not clear how to process old RRC messages buffered in the source cell, which would affect the DAPS handover. For example, it is not clear how to process old RRC messages buffered in the source cell when an SRB of the source cell is resumed due to the DAPS handover failure.

In view of the above problems, the present disclosure proposes a DAPS handover scheme. The terminal device deletes old RRC messages buffered in the source cell during the DAPS handover process, such that the terminal device can avoid transmitting unnecessary RRC messages when handed over back to the source cell after the DAPS handover fails.

The technical solutions of the present disclosure will be described in detail below with reference to specific embodiments.

FIG. 2 is a schematic flowchart illustrating a wireless communication method 200 according to an embodiment of the present disclosure. As shown in FIG. 2, the method 200 may include, but not limited to, the following contents.

At S210, a terminal device receives a handover command that instructs the terminal device to be handed over from a source cell to a target cell in a DAPS handover mode.

At S220, the terminal device performs at least one of the following operations when the terminal device suspends at least one SRB of the source cell in accordance with the handover command: instructing a PDCP entity corresponding to the at least one SRB to suspend the PDCP entity, re-establishing an RLC entity corresponding to the at least one SRB, and triggering an SDU deletion process.

It can be appreciated that a source base station serves the source cell, and a target base station serves the target cell.

It is to be noted that the handover command (HO command) may also be referred to as RRC reconfiguration information.

It is to be noted that the terminal device will maintain protocol stacks of both the source cell and the target cell during the DAPS handover.

Optionally, the handover command may be transmitted by the source base station. That is, the above step S210 may specifically include: the terminal device receiving the handover command transmitted by the source base station.

Optionally, in an embodiment of the present disclosure, the terminal device may suspend at least one SRB of the source cell in accordance with the handover command, and the terminal device may also initiate a synchronization process/random access to the target cell in accordance with the handover command.

It is to be noted that the random access may be a two-step random access or a four-step random access.

Optionally, the embodiment of the present disclosure may be applied to licensed frequency bands or unlicensed frequency bands, and the present disclosure is not limited to any of these examples.

In an embodiment of the present disclosure, the term "suspend" may also be expressed as pause, or any other words with similar meanings.

It is to be noted that the at least one SRB may be all SRBs of the source cell, or may be some of the SRBs of the source cell, and the present disclosure is not limited to any of these examples.

In an embodiment of the present disclosure, when the terminal device suspends the at least one SRB of the source cell in accordance with the handover command, the terminal device may instruct a PDCP entity corresponding to the at least one SRB to suspend the PDCP entity. That is, the terminal device can process old RRC messages buffered in the PDCP entity of the source cell during the DAPS handover process. Similarly, when the terminal device suspends the at least one SRB of the source cell in accordance with the handover command, the terminal device may re-establish an RLC entity corresponding to the at least one SRB. That is, the terminal device can process old RRC messages buffered in the RLC entity of the source cell during the DAPS handover process. Similarly, when the terminal device suspends the at least one SRB of the source cell in accordance with the handover command, the terminal device may trigger a PDCP SDU deletion process. That is, the terminal device can delete old RRC messages buffered in the PDCP SDU of the source cell during the DAPS handover process.

Optionally, as Example 1, when the terminal device instructs the PDCP entity corresponding to the at least one SRB to suspend the PDCP entity, the terminal device may delete all PDCP Protocol Data Units (PDUs) and/or PDCP SDUs of the PDCP entity corresponding to the at least one SRB.

That is, in Example 1, the terminal device may instruct the PDCP entity corresponding to the at least one SRB to suspend the PDCP entity and delete old RRC messages buffered in all PDCP PDUs and/or PDCP SDUs of the PDCP entity corresponding to the at least one SRB during the DAPS handover process.

Optionally, in Example 1, the terminal device may further reset state information of the PDCP entity corresponding to the at least one SRB. For example, the terminal device may reset a timer configured in the PDCP entity corresponding to the at least one SRB, and/or the terminal device may initialize a state variable of the PDCP entity corresponding to the at least one SRB.

Optionally, the timer configured in the PDCP entity corresponding to the at least one SRB may be a timer used for deletion and/or ordering.

Optionally, as Example 2, when the terminal device re-establishes the RLC entity corresponding to the at least one SRB, the terminal device may delete all data in a buffer of the RLC entity corresponding to the at least one SRB.

Optionally, all the data may include at least one of: all RLC SDUs, all RLC PDUs, or RLC SDU segments.

That is, in Example 2, the terminal device may re-establish the RLC entity corresponding to the at least one SRB, and delete all data in the buffer of the RLC entity corresponding to the at least one SRB during the DAPS handover process, i.e., delete all buffered old RRC messages in the RLC entity.

Optionally, in Example 2, the terminal device may reset state information of the RLC entity corresponding to the at least one SRB. For example, the terminal device may reset a timer configured in the RLC entity corresponding to the at least one SRB, and/or the terminal device may initialize a state variable of the RLC entity corresponding to the at least one SRB.

Optionally, the timer configured in the RLC entity corresponding to the at least one SRB may be a timer used for deletion and/or ordering.

Optionally, as Example 3, when the terminal device triggers the PDCP SDU deletion process, the terminal device may delete all PDCP PDUs and/or PDCP SDUs in the PDCP entity corresponding to the at least one SRB.

That is, in Example 3, the terminal device may trigger the PDCP SDU deletion process during the DAPS handover process, and delete old RRC messages in a buffer of all PDCP PDUs and/or PDCP SDUs of the PDCP entity corresponding to the at least one SRB.

It is to be noted that, in an embodiment of the present disclosure, after the terminal device receives the handover command and before the terminal device suspends the at least one SRB of the source cell in accordance with the handover command, the terminal device may perform some other operations. For example, for each SRB, one or more RLC entities may be established for the target cell using the same configuration as the source cell. In another example, for each SRB, a logical channel may be established for a target Primary Cell (PCell) using the same configuration as the source cell.

Therefore, in the embodiment of the present disclosure, during the DAPS handover process, the terminal device suspends at least one SRB of the source cell in accordance with the handover command, and deletes old RRC messages buffered in the source cell, such that the terminal device can avoid transmitting unnecessary RRC messages when handed over back to the source cell after the DAPS handover fails.

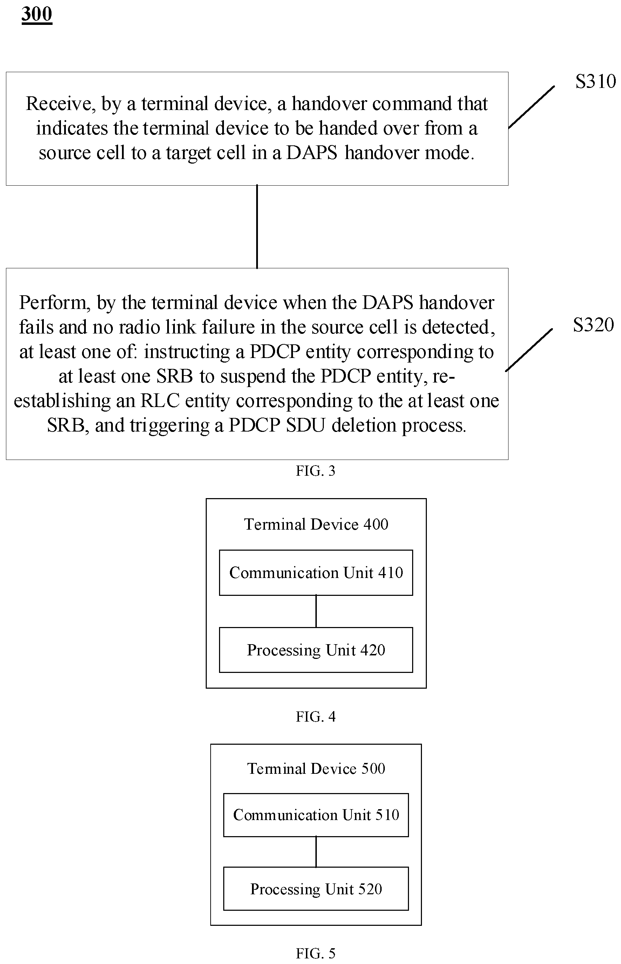

FIG. 3 is a schematic flowchart illustrating a wireless communication method 300 according to an embodiment of the present disclosure. As shown in FIG. 3, the method 300 may include, but be not limited to, the following contents:

At S310, a terminal device receives a handover command that instructs the terminal device to be handed over from a source cell to a target cell in a DAPS handover mode.

At S320, the terminal device performs at least one of the following operations when the DAPS handover fails and no radio link failure in the source cell is detected: instructing a PDCP layer corresponding to at least one SRB of the source cell to suspend a PDCP entity, re-establishing an RLC entity corresponding to the at least one SRB of the source cell, and triggering a PDCP SDU deletion process.

It can be appreciated that a source base station serves the source cell, and a target base station serves the target cell.

It is to be noted that the handover command may also be referred to as RRC reconfiguration information.

It is to be noted that the terminal device will maintain protocol stacks of both the source cell and the target cell during the DAPS handover. In addition, during the period when the terminal device initiates random access to the target cell, the terminal device may keep monitoring a radio link of the source cell.

Optionally, the handover command may be transmitted by the source base station. That is, the above step S310 may specifically include: the terminal device receiving the handover command transmitted by the source base station.

Optionally, in an embodiment of the present disclosure, the terminal device may perform DAPS handover in accordance with the handover command. For example, the terminal device may initiate a synchronization procedure/random access to the target cell in accordance with the handover command.

It is to be noted that the random access may be a two-step random access or a four-step random access.

Optionally, the embodiment of the present disclosure may be applied to licensed frequency bands or unlicensed frequency bands, and the present disclosure is not limited to any of these examples.

It is to be noted that the at least one SRB may be all SRBs of the source cell, or may be some of the SRBs of the source cell, and the present disclosure is not limited to any of these examples.

In an embodiment of the present disclosure, when the DAPS handover fails and no radio link failure in the source cell is detected, the terminal device may instruct a PDCP entity corresponding to the at least one SRB to suspend the PDCP entity. That is, the terminal device can process old RRC messages buffered in the PDCP entity of the source cell during the DAPS handover process. Similarly, when the DAPS handover fails and no radio link failure in the source cell is detected, the terminal device may re-establish an RLC entity corresponding to the at least one SRB. That is, the terminal device can process old RRC messages buffered in the RLC entity of the source cell during the DAPS handover process. Similarly, when the DAPS handover fails and no radio link failure in the source cell is detected, the terminal device may trigger a PDCP SDU deletion process. That is, the terminal device can delete old RRC messages buffered in the PDCP SDU of the source cell during the DAPS handover process.

Optionally, as Example a, when the terminal device instructs the PDCP entity corresponding to the at least one SRB to suspend the PDCP entity, the terminal device may delete all PDCP PDUs and/or PDCP SDUs of the PDCP entity corresponding to the at least one SRB.

That is, in Example a, when the DAPS handover fails and no radio link failure in the source cell is detected, the terminal device may instruct the PDCP entity corresponding to the at least one SRB to suspend the PDCP entity and delete old RRC messages buffered in all PDCP PDUs and/or PDCP SDUs of the PDCP entity corresponding to the at least one SRB.

Optionally, in Example a, the terminal device may further reset state information of the PDCP entity corresponding to the at least one SRB. For example, the terminal device may reset a timer configured in the PDCP entity corresponding to the at least one SRB, and/or the terminal device may initialize a state variable of the PDCP entity corresponding to the at least one SRB.

Optionally, the timer configured in the PDCP entity corresponding to the at least one SRB may be a timer used for deletion and/or ordering.

Optionally, as Example b, when the terminal device re-establishes the RLC entity corresponding to the at least one SRB, the terminal device may delete all data in a buffer of the RLC entity corresponding to the at least one SRB.

Optionally, all the data may include at least one of: all RLC SDUs, all RLC PDUs, or RLC SDU segments.

That is, in Example b, when the DAPS handover fails and no radio link failure in the source cell is detected, the terminal device may re-establish the RLC entity corresponding to the at least one SRB, and delete all data in the buffer of the RLC entity corresponding to the at least one SRB, i.e., delete all buffered old RRC messages in the RLC entity.

Optionally, in Example b, the terminal device may reset state information of the RLC entity corresponding to the at least one SRB. For example, the terminal device may reset a timer configured in the RLC entity corresponding to the at least one SRB, and/or the terminal device may initialize a state variable of the RLC entity corresponding to the at least one SRB.

Optionally, the timer configured in the RLC entity corresponding to the at least one SRB may be a timer used for deletion and/or ordering.

Optionally, as Example c, when the terminal device triggers the PDCP SDU deletion process, the terminal device may delete all PDCP PDUs and/or PDCP SDUs in the PDCP entity corresponding to the at least one SRB.

That is, in Example c, when the DAPS handover fails and no radio link failure in the source cell is detected, the terminal device may trigger the PDCP SDU deletion process, and delete old RRC messages in a buffer of all PDCP PDUs and/or PDCP SDUs of the PDCP entity corresponding to the at least one SRB.

In an embodiment of the present disclosure, the term "suspend" may also be expressed as pause, or any other words with similar meanings.

Optionally, in an embodiment of the present disclosure, the terminal device may further resume the at least one SRB of the source cell.

It is to be noted that, when the DAPS handover fails and no radio link failure in the source cell is detected, the above step S320 may be performed before the terminal device resumes the at least one SRB of the source cell, or the above step S320 may alternatively be performed after the terminal device resumes the at least one SRB of the source cell.

Optionally, when the DAPS handover fails and no radio link failure in the source cell is detected, and the step S320 is performed before the terminal device resumes the at least one SRB of the source cell, the terminal device may perform some other operations before the step S320. For example, for each SRB, if no master key update is received, the terminal device may configure a PDCP entity for the source cell using the same state variable as the PDCP entity of the target cell. In another example, for each SRB, a PDCP entity of the target cell may be released. In another example, for each SRB, an RLC entity of the target cell and a logical channel associated with the target cell may be released. In another example, a physical channel configuration of the target cell may be released. In another example, a Service Data Adaptation Protocol (SDAP) configuration used in the source cell may be resumed. In another example, a key used in the target cell may be discarded.

Optionally, when the DAPS handover fails and no radio link failure in the source cell is detected, and the step S320 is performed after the terminal device resumes the at least one SRB of the source cell, the terminal device may perform some other operations before resuming the at least one SRB of the source cell. For example, for each SRB, if no master key update is received, the terminal device may configure a PDCP entity for the source cell using the same state variable as the PDCP entity of the target cell. In another example, for each SRB, a PDCP entity of the target cell may be released. In another example, for each SRB, an RLC entity of the target cell and a logical channel associated with the target cell may be released. In another example, a physical channel configuration of the target cell may be released. In another example, an SDAP configuration used in the source cell may be resumed. In another example, a key used in the target cell may be discarded.

Optionally, when the DAPS handover fails and no radio link failure in the source cell is detected, and the step S320 is performed before the terminal device resumes the at least one SRB of the source cell, the step S320 may be performed for each SRB. For example, for each SRB, the terminal device may instruct a PDCP layer corresponding to the at least one SRB of the source cell to suspend a PDCP entity. In another example, for each SRB, the terminal device may re-establish an RLC entity corresponding to the at least one SRB of the source cell. In another example, for each SRB, the terminal device may trigger a PDCP SDU deletion process. In this case, the terminal device may also perform some other operations after performing the step S320 and before resuming the at least one SRB of the source cell. For example, for each SRB, if no master key update is received, the terminal device may configure a PDCP entity for the source cell using the same state variable as the PDCP entity of the target cell. In another example, for each SRB, a PDCP entity of the target cell may be released. In another example, for each SRB, an RLC entity of the target cell and a logical channel associated with the target cell may be released. In another example, a physical channel configuration of the target cell may be released. In another example, an SDAP configuration used in the source cell may be resumed. In another example, a key used in the target cell may be discarded.

Therefore, in the embodiment of the present disclosure, in the DAPS handover process, when the DAPS handover fails and no radio link failure in the source cell is detected, the terminal device can delete old RRC messages buffered in the source cell, such that the terminal device can avoid transmitting unnecessary RRC messages when handed over back to the source cell after the DAPS handover fails.

The method embodiments of the present disclosure have been described in detail above with reference to FIGS. 2 and 3, and apparatus embodiments of the present disclosure will be described in detail below with reference to FIGS. 4 to 8. It can be appreciated that the apparatus embodiments and the method embodiments correspond to each other, and for similar description, reference can be made to the method embodiments.

FIG. 4 shows a schematic block diagram of a terminal device 400 according to an embodiment of the present disclosure. As shown in FIG. 4, the terminal device 400 includes a communication unit 410 and a processing unit 420.

The communication unit 410 is configured to receive a handover command that instructs the terminal device to be handed over from a source cell to a target cell in a DAPS handover mode.

The processing unit 420 is configured to at least one of the following operations when the terminal device suspends at least one SRB of the source cell in accordance with the handover command:
instructing a PDCP entity corresponding to the at least one SRB to suspend the PDCP entity,
re-establishing an RLC entity corresponding to the at least one SRB, and
triggering a PDCP SDU deletion process.

Optionally, when the terminal device instructs the PDCP entity corresponding to the at least one SRB to suspend the PDCP entity, the processing unit 420 may be further configured to delete all PDCP PDUs and/or PDCP SDUs of the PDCP entity corresponding to the at least one SRB.

Optionally, the processing unit 420 may be further configured to reset state information of the PDCP entity corresponding to the at least one SRB.

Optionally, the processing unit 420 may be configured to: reset a timer configured in the PDCP entity corresponding to the at least one SRB, and/or initialize a state variable of the PDCP entity corresponding to the at least one SRB.

Optionally, when the terminal device re-establishes the RLC entity corresponding to the at least one SRB, the processing unit 420 may be further configured to delete all data in a buffer of the RLC entity corresponding to the at least one SRB.

Optionally, all the data may include at least one of: all RLC SDUs, all RLC PDUs, or RLC SDU segments.

Optionally, the processing unit 420 may be further configured to reset state information of the RLC entity corresponding to the at least one SRB.

Optionally, the processing unit 420 may be configured to: reset a timer configured in the RLC entity corresponding to the at least one SRB, and/or initialize a state variable of the RLC entity corresponding to the at least one SRB.

Optionally, when the terminal device triggers the PDCP SDU deletion process, the processing unit 420 may be further configured to delete all PDCP PDUs and/or PDCP SDUs of the PDCP entity corresponding to the at least one SRB.

Optionally, in some embodiments, the above-mentioned communication unit may be a communication interface or a transceiver, or an input/output interface of a communication chip or a system-on-chip. The above processing unit may be one or more processors.

It can be appreciated that the terminal device 400 according to the embodiment of the present disclosure may correspond to the terminal device in the method embodiment of the present disclosure, and the above and other operations and/or functions of the various units in the terminal device 400 are provided for implementing the corresponding process performed by the terminal device in the method 200 shown in FIG. 2, and details thereof will be omitted here for brevity.

FIG. 5 shows a schematic block diagram of a terminal device 500 according to an embodiment of the present disclosure. As shown in FIG. 5, the terminal device 500 includes: a communication unit 510 and a processing unit 520.

The communication unit 510 is configured to receive a handover command that instructs the terminal device to be handed over from a source cell to a target cell in a DAPS handover mode.

The processing unit 520 is configured to perform at least one of the following operations when the DAPS handover fails and no radio link failure in the source cell is detected: instructing a PDCP layer corresponding to at least one SRB of the source cell to suspend a PDCP entity, re-establishing an RLC entity corresponding to the at least one SRB of the source cell, and triggering a PDCP SDU deletion process.

Optionally, the processing unit 520 may be further configured to resume the at least one SRB of the source cell.

Optionally, when the terminal device instructs the PDCP entity corresponding to the at least one SRB to suspend the PDCP entity, the processing unit 520 may be further configured to delete all PDUs and/or PDCP SDUs of the PDCP entity corresponding to the at least one SRB.

Optionally, the processing unit 520 may be further configured to reset state information of the PDCP entity corresponding to the at least one SRB.

Optionally, the processing unit 520 may be configured to reset a timer configured in the PDCP entity corresponding to the at least one SRB, and/or initialize a state variable of the PDCP entity corresponding to the at least one SRB.

Optionally, when the terminal device re-establishes the RLC entity corresponding to the at least one SRB, the processing unit 520 may be further configured to delete all data in a buffer of the RLC entity corresponding to the at least one SRB.

Optionally, all the data may include at least one of: all RLC SDUs, all RLC PDUs, or RLC SDU segments.

Optionally, the processing unit 520 may be further configured to reset state information of the RLC entity corresponding to the at least one SRB.

Optionally, the processing unit 520 may be configured to reset a timer configured in the RLC entity corresponding to the at least one SRB, and/or initialize a state variable of the RLC entity corresponding to the at least one SRB.

Optionally, when the terminal device triggers the PDCP SDU deletion process, the processing unit 520 may be further configured to delete all PDCP PDUs and/or PDCP SDUs of the PDCP entity corresponding to the at least one SRB.

Optionally, in some embodiments, the above communication unit may be a communication interface or a transceiver, or an input/output interface of a communication chip or a system-on-chip. The above processing unit may be one or more processors.

It can be appreciated that the terminal device 500 according to the embodiment of the present disclosure may correspond to the terminal device in any of the method embodiments of the present disclosure, and the above and other operations and/or functions of the respective units in the terminal device 500 are provided to implement the corresponding process of the terminal device in the method 300 as shown in FIG. 3. For the sake of brevity, details thereof will be omitted here.

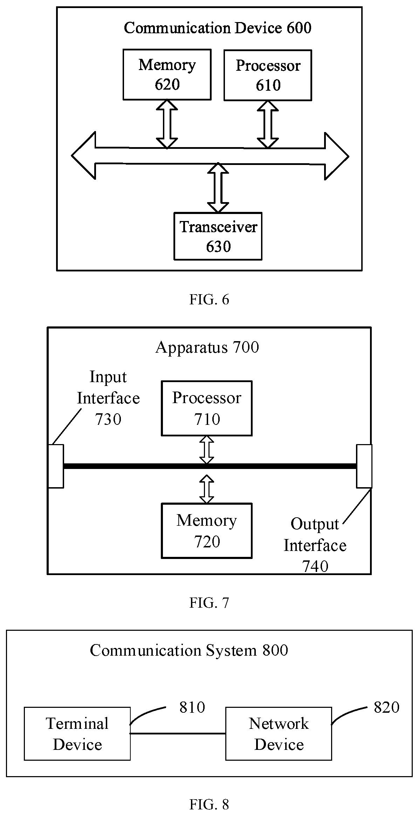

FIG. 6 is a schematic diagram showing a structure of a communication device 600 according to an embodiment of the present disclosure. The communication device 600 shown in FIG. 6 includes a processor 610, and the processor 610 can invoke and execute a computer program from a memory to implement the method in the embodiment of the present disclosure.

Optionally, as shown in FIG. 6, the communication device 600 may further include a memory 620. The processor 610 can invoke and execute a computer program from the memory 620 to implement the method in the embodiment of the present disclosure.

The memory 620 may be a separate device independent from the processor 610, or may be integrated in the processor 610.

Optionally, as shown in FIG. 6, the communication device 600 may further include a transceiver 630, and the processor 610 may control the transceiver 630 to communicate with other devices, and in particular, transmit information or data to other devices, or receive information or data transmitted by other devices.

Here, the transceiver 630 may include a transmitter and a receiver. The transceiver 630 may further include one or more antennas.

Optionally, the communication device 600 may specifically be the network device according to the embodiment of the present disclosure, and the communication device 600 may implement the corresponding processes implemented by the network device in any of the methods according to the embodiments of the present disclosure. For the sake of brevity, details thereof will be omitted here.

Optionally, the communication device 600 may specifically be the mobile terminal/terminal device according to the embodiment of the present disclosure, and the communication device 600 may implement the corresponding processes implemented by the mobile terminal/terminal device in any of the methods according to the embodiments of the present disclosure. For the sake of brevity, details thereof will be omitted here.

FIG. 7 is a schematic diagram showing a structure of an apparatus according to an embodiment of the present disclosure. The apparatus 700 shown in FIG. 7 includes a processor 710, and the processor 710 can invoke and execute a computer program from a memory to implement the method in the embodiment of the present disclosure.

Optionally, as shown in FIG. 7, the apparatus 700 may further include a memory 720. The processor 710 can invoke and execute a computer program from the memory 720 to implement the method in the embodiment of the present disclosure.

The memory 720 may be a separate device independent from the processor 710, or may be integrated in the processor 710.

Optionally, the apparatus 700 may further include an input interface 730. The processor 710 can control the input interface 730 to communicate with other devices or chips, and in particular, obtain information or data transmitted by other devices or chips.

Optionally, the apparatus 700 may further include an output interface 740. The processor 710 can control the output interface 740 to communicate with other devices or chips, and in particular, output information or data to other devices or chips.

Optionally, the apparatus can be applied to the network device in the embodiment of the present disclosure, and the apparatus can implement the corresponding processes implemented by the network device in the various methods of the embodiments of the present disclosure. For the sake of brevity, details thereof will be omitted here.

Optionally, the apparatus can be applied to the mobile terminal/terminal device in the embodiment of the present disclosure, and the apparatus can implement the corresponding process implemented by the mobile terminal/terminal device in each method of the embodiment of the present disclosure. For the sake of brevity, details thereof will be omitted here.

Optionally, the apparatus in the embodiment of the present disclosure may be a chip, and the chip may also be referred to as a system-level chip, a system-chip, a chip system, or a system-on-chip.

FIG. 8 is a schematic block diagram showing a communication system 800 according to an embodiment of the present disclosure. As shown in FIG. 8, the communication system 800 includes a terminal device 810 and a network device 820.

Here, the terminal device 810 can be configured to implement the corresponding functions implemented by the terminal device in the above method, and the network device 820 can be configured to implement the corresponding functions implemented by the network device in the above method. For the sake of brevity, details thereof will be omitted here.

It is to be noted that the processor in the embodiment of the present disclosure may be an integrated circuit chip with signal processing capability. In an implementation, the steps of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the steps of the above methods in combination with its hardware.

It can be appreciated that the memory in the embodiments of the present disclosure may be a volatile memory or a non-volatile memory, or may include both volatile and non-volatile memories. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) ), and Direct Rambus RAM (DR RAM). It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

An embodiment of the present disclosure also provides a computer readable storage medium having a computer program stored thereon.

Optionally, the computer readable storage medium can be applied to the network device in the embodiment of the present disclosure, and the computer program can cause a computer to perform corresponding procedures implemented by the network device in the method according to any of the embodiments of the present disclosure. Details thereof will be omitted here for simplicity.

Optionally, the computer readable storage medium can be applied to the mobile terminal/terminal device in the embodiment of the present disclosure, and the computer program can cause a computer to perform corresponding procedures implemented by the mobile terminal/terminal device in the method according to any of the embodiments of the present disclosure. Details thereof will be omitted here for simplicity.

An embodiment of the present disclosure also provides a computer program product including computer program instructions.

Optionally, the computer program product can be applied to the network device in the embodiment of the present disclosure, and the computer program instructions can cause a computer to perform corresponding procedures implemented by the network device in the method according to any of the embodiments of the present disclosure. Details thereof will be omitted here for simplicity.

Optionally, the computer program product can be applied to the mobile terminal/terminal device in the embodiment of the present disclosure, and the computer program instructions can cause a computer to perform corresponding procedures implemented by the mobile terminal/terminal device in the method according to any of the embodiments of the present disclosure. Details thereof will be omitted here for simplicity.

An embodiment of the present disclosure also provides a computer program.

Optionally, the computer program can be applied to the network device in the embodiment of the present disclosure. The computer program, when executed by a computer, can cause the computer to perform corresponding procedures implemented by the network device in the method according to any of the embodiments of the present disclosure. Details thereof will be omitted here for simplicity.

Optionally, the computer program can be applied to the mobile terminal/terminal device in the embodiment of the present disclosure. The computer program, when executed by a computer, can cause the computer to perform corresponding procedures implemented by the mobile terminal/terminal device in the method according to any of the embodiments of the present disclosure. Details thereof will be omitted here for simplicity.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to cause a computer device, such as a personal computer, a server, or a network device, etc., to perform all or part of the steps of the method described in each of the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

While the specific embodiments of the present disclosure have been described above, the scope of the present disclosure is not limited to these embodiments. Various variants and alternatives can be made by those skilled in the art without departing from the scope of the present disclosure. These variants and alternatives are to be encompassed by the scope of present disclosure as defined by the claims as attached.

The embodiments of the disclosure provide a wireless communication method and a terminal device. The terminal device deletes old RRC messages buffered in a source cell during a DAPS handover process, such that the terminal device can avoid transmitting unnecessary RRC messages when handed over back to the source cell after the DAPS handover fails.

In a first clause of the present disclosure, a wireless communication method is provided and includes:
receiving, by a terminal device, a handover command that instructs the terminal device to be handed over from a source cell to a target cell in a Dual Active Protocol Stack (DAPS) handover mode; and
performing, by the terminal device when the terminal device suspends at least one Signaling Radio Bearer (SRB) of the source cell in accordance with the handover command, at least one of:
   instructing a Packet Data Convergence Protocol (PDCP) entity corresponding to the at least one SRB to suspend the PDCP entity,
   re-establishing a Radio Link Control (RLC) entity corresponding to the at least one SRB, and
   triggering a PDCP Service Data Unit (SDU) deletion process.

In a second clause, according to the first clause, the method further includes: when the terminal device instructs the PDCP entity corresponding to the at least one SRB to suspend the PDCP entity:
deleting, by the terminal device, all PDCP Protocol Data Units (PDUs) and/or PDCP SDUs of the PDCP entity corresponding to the at least one SRB.

In a third clause, according to the second clause, the method further includes:
resetting, by the terminal device, state information of the PDCP entity corresponding to the at least one SRB.

In a fourth clause, according to the third clause, resetting, by the terminal device, the state information of the PDCP entity corresponding to the at least one SRB includes:
resetting, by the terminal device, a timer configured in the PDCP entity corresponding to the at least one SRB, and/or initializing, by the terminal device, a state variable of the PDCP entity corresponding to the at least one SRB.

In a fifth clause, according to the first clause, the method further includes: when the terminal device re-establishes the RLC entity corresponding to the at least one SRB:
deleting, by the terminal device, all data in a buffer of the RLC entity corresponding to the at least one SRB.

In a sixth clause, according to the fifth clause, all the data includes at least one of:
all RLC SDUs, all RLC PDUs, or RLC SDU segments.

In a seventh clause, according to the fifth clause or the sixth clause, the method further includes:
resetting, by the terminal device, state information of the RLC entity corresponding to the at least one SRB.

In an eighth clause, according to the seventh clause, resetting, by the terminal device, the state information of the RLC entity corresponding to the at least one SRB includes:
resetting, by the terminal device, a timer configured in the RLC entity corresponding to the at least one SRB, and/or initializing, by the terminal device, a state variable of the RLC entity corresponding to the at least one SRB.

In a ninth clause, according to the first clause, the method further includes: when the terminal device triggers the PDCP SDU deletion process,
deleting, by the terminal device, all PDCP PDUs and/or PDCP SDUs of the PDCP entity corresponding to the at least one SRB.

In a tenth clause, a wireless communication method is provided and includes:
receiving, by a terminal device, a handover command that instructs the terminal device to be handed over from a source cell to a target cell in a Dual Active Protocol Stack (DAPS) handover mode; and
performing, by the terminal device when the DAPS handover fails and no radio link failure in the source cell is detected, at least one of:
   instructing a Packet Data Convergence Protocol (PDCP) layer corresponding to at least one SRB of the source cell to suspend a PDCP entity,
   re-establishing a Radio Link Control (RLC) entity corresponding to the at least one SRB of the source cell, and
   triggering a PDCP Service Data Unit (SDU) deletion process.

In an eleventh clause, according to the tenth clause, the method further includes:
resuming, by the terminal device, the at least one SRB of the source cell.

In a twelfth clause, according to the tenth clause or the eleventh clause, the method further includes: when the terminal device instructs the PDCP entity corresponding to the at least one SRB to suspend the PDCP entity,
deleting, by the terminal device, all PDCP Protocol Data Units (PDUs) and/or PDCP SDUs of the PDCP entity corresponding to the at least one SRB.

In a thirteenth clause, according to the twelfth clause, the method further includes:
resetting, by the terminal device, state information of the PDCP entity corresponding to the at least one SRB.

In a fourteenth clause, according to the thirteenth clause, resetting, by the terminal device, the state information of the PDCP entity corresponding to the at least one SRB includes:
resetting, by the terminal device, a timer configured in the PDCP entity corresponding to the at least one SRB, and/or initializing, by the terminal device, a state variable of the PDCP entity corresponding to the at least one SRB.

In a fifteenth clause, according to the tenth clause or the eleventh clause, the method further includes: when the terminal device re-establishes the RLC entity corresponding to the at least one SRB,
deleting, by the terminal device, all data in a buffer of the RLC entity corresponding to the at least one SRB.

In a sixteenth clause, according to the fifteenth clause, all the data includes at least one of:
all RLC SDUs, all RLC PDUs, or RLC SDU segments.

In a seventeenth clause, according to the fifteenth clause or the sixteenth clause, the method further includes:
resetting, by the terminal device, state information of the RLC entity corresponding to the at least one SRB.

In an eighteenth clause, according to the seventeenth clause, resetting, by the terminal device, the state information of the RLC entity corresponding to the at least one SRB includes:
resetting, by the terminal device, a timer configured in the RLC entity corresponding to the at least one SRB, and/or initializing, by the terminal device, a state variable of the RLC entity corresponding to the at least one SRB.

In a nineteenth clause, according to the tenth clause or the eleventh clause, the method further includes: when the terminal device triggers the PDCP SDU deletion process,
deleting, by the terminal device, all PDCP PDUs and/or PDCP SDUs of the PDCP entity corresponding to the at least one SRB.

In a twentieth clause, a terminal device is provided and includes:
a communication unit configured to receive a handover command that instructs the terminal device to be handed over from a source cell to a target cell in a Dual Active Protocol Stack (DAPS) handover mode; and
a processing unit configured to perform, when the terminal device suspends at least one Signaling Radio Bearer (SRB) of the source cell in accordance with the handover command, at least one of:
   instructing a Packet Data Convergence Protocol (PDCP) entity corresponding to the at least one SRB to suspend the PDCP entity,
   re-establishing a Radio Link Control (RLC) entity corresponding to the at least one SRB, and
   triggering a PDCP Service Data Unit (SDU) deletion process.

In a twenty-first clause, according to the twentieth clause, when the terminal device instructs the PDCP entity corresponding to the at least one SRB to suspend the PDCP entity, the processing unit is further configured to delete all PDCP Protocol Data Units (PDUs) and/or PDCP SDUs of the PDCP entity corresponding to the at least one SRB.

In a twenty-second clause, according to the twenty-first clause, the processing unit is further configured to reset state information of the PDCP entity corresponding to the at least one SRB.

In a twenty-third clause, according to the twenty-second clause, the processing unit is configured to:
reset a timer configured in the PDCP entity corresponding to the at least one SRB, and/or initialize a state variable of the PDCP entity corresponding to the at least one SRB.

In a twenty-fourth clause, according to the twentieth clause, when the terminal device re-establishes the RLC entity corresponding to the at least one SRB, the processing unit is further configured to delete all data in a buffer of the RLC entity corresponding to the at least one SRB.

In a twenty-fifth clause, according to the twenty-fourth clause, all the data includes at least one of:
all RLC SDUs, all RLC PDUs, or RLC SDU segments.

In a twenty-sixth clause, according to the twenty-fourth clause or the twenty-fifth clause, the processing unit is further configured to reset state information of the RLC entity corresponding to the at least one SRB.

In a twenty-seventh clause, according to the twenty-sixth clause, the processing unit is configured to:
reset a timer configured in the RLC entity corresponding to the at least one SRB, and/or initialize a state variable of the RLC entity corresponding to the at least one SRB.

In a twenty-eighth clause, according to the twentieth clause, when the terminal device triggers the PDCP SDU deletion process, the processing unit is further configured to delete all PDCP PDUs and/or PDCP SDUs of the PDCP entity corresponding to the at least one SRB.

In a twenty-ninth clause, a terminal device is provided and includes:
a communication unit configured to receive a handover command that instructs the terminal device to be handed over from a source cell to a target cell in a Dual Active Protocol Stack (DAPS) handover mode; and
a processing unit configured to perform, when the DAPS handover fails and no radio link failure in the source cell is detected, at least one of:
   instructing a Packet Data Convergence Protocol (PDCP) layer corresponding to at least one SRB of the source cell to suspend a PDCP entity,
   re-establishing a Radio Link Control (RLC) entity corresponding to the at least one SRB of the source cell, and
   triggering a PDCP Service Data Unit (SDU) deletion process.

In a thirtieth clause, according to the twenty-ninth clause, the processing unit is further configured to resume the at least one SRB of the source cell.

In a thirty-first clause, according to the twenty-ninth clause or the thirtieth clause, when the terminal device instructs the PDCP entity corresponding to the at least one SRB to suspend the PDCP entity, the processing unit is further configured to delete all PDCP Protocol Data Units (PDUs) and/or PDCP SDUs of the PDCP entity corresponding to the at least one SRB.

In a thirty-second clause, according to the thirty-first clause, the processing unit is further configured to reset state information of the PDCP entity corresponding to the at least one SRB.

In a thirty-third clause, according to the thirty-second clause, the processing unit is configured to:
reset a timer configured in the PDCP entity corresponding to the at least one SRB, and/or initialize a state variable of the PDCP entity corresponding to the at least one SRB.

In a thirty-fourth clause, according to the twenty-ninth clause or the thirtieth clause, when the terminal device re-establishes the RLC entity corresponding to the at least one SRB, the processing unit is further configured to delete all data in a buffer of the RLC entity corresponding to the at least one SRB.

In a thirty-fifth clause, according to the thirty-fourth clause, all the data includes at least one of:
all RLC SDUs, all RLC PDUs, or RLC SDU segments.

In a thirty-sixth clause, according to the thirty-fourth clause or the thirty-fifth clause, the processing unit is further configured to reset state information of the RLC entity corresponding to the at least one SRB.

In a thirty-seventh clause, according to the thirty-sixth clause, the processing unit is configured to:
reset a timer configured in the RLC entity corresponding to the at least one SRB, and/or initialize a state variable of the RLC entity corresponding to the at least one SRB.

In a thirty-eighth clause, according to the twenty-ninth clause or the thirtieth clause, when the terminal device triggers the PDCP SDU deletion process, the processing unit is further configured to delete all PDCP PDUs and/or PDCP SDUs of the PDCP entity corresponding to the at least one SRB.

In a thirty-ninth clause, a terminal device is provided and includes: a memory having a computer program stored thereon, and a processor configured to invoke and execute the computer program stored in the memory to perform the method according to any of the first clause to the ninth clause.

In a fortieth clause, a terminal device is provided and includes: a memory having a computer program stored thereon, and a processor configured to invoke and execute the computer program stored in the memory to perform the method according to any of the tenth clause to the nineteenth clause.

In a forty-first clause, a chip is provided and includes a processor configured to invoke and execute a computer program from a memory, to cause a device provided with the chip to perform the method according to any of the first clause to the ninth clause.

In a forty-second clause, a chip is provided and includes a processor configured to invoke and execute a computer program from a memory, to cause a device provided with the chip to perform the method according to any of the tenth clause to the nineteenth clause.

In a forty-third clause, a computer-readable storage medium having a computer program stored thereon is provided, where the computer program causes a computer to perform the method according to any of the first clause to the ninth clause.

In a forty-fourth clause, a computer-readable storage medium having a computer program stored thereon is provides, where the computer program causes a computer to perform the method according to any of the tenth clause to the nineteenth clause.

In a forty-fifth clause, a computer program product is provided and includes computer program instructions that cause a computer to perform the method according to any of the first clause to the ninth clause.

In a forty-sixth clause, a computer program product is provided and includes computer program instructions that cause a computer to perform the method according to any of the tenth clause to the nineteenth clause.

In a forty-seventh clause, a computer program is provided, and computer program causes a computer to perform the method according to any of the first clause to the ninth clause.

In a forty-eighth clause, a computer program is provided, and computer program causes a computer to perform the method according to any of the tenth clause to the nineteenth clause.

## Claims

1. A wireless communication method, comprising:
receiving (S310), by a terminal device, a handover command that instructs the terminal device to be handed over from a source cell to a target cell in a Dual Active Protocol Stack, DAPS, handover mode,
**characterized in that**, the method further comprises:
performing (S320), by the terminal device when the DAPS handover fails and no radio link failure in the source cell is detected:
triggering a Packet Data Convergence Protocol, PDCP, Service Data Unit, SDU, deletion process, and deleting all PDCP, Protocol Data Units, PDUs, and PDCP SDUs of a PDCP entity corresponding to at least one Signaling Radio Bearer, SRB.

2. The method according to claim 1, wherein when the DAPS handover fails and no radio link failure in the source cell is detected, the terminal device further performs at least one of:
instructing a PDCP layer corresponding to the at least one SRB of the source cell to suspend the PDCP entity; or
re-establishing a Radio Link Control (RLC) entity corresponding to the at least one SRB of the source cell.

3. The method according to claim 1 or 2, further comprising:
resuming, by the terminal device, the at least one SRB of the source cell.

4. The method according to any one of claims 1 to 3, wherein when the terminal device instructs the PDCP layer corresponding to the at least one SRB of the source cell to suspend the PDCP entity, the method further comprises:
deleting, by the terminal device, all PDCP PDUs and/or PDCP SDUs of the PDCP entity corresponding to the at least one SRB;
and/or,
when the terminal device re-establishes the RLC entity corresponding to the at least one SRB, the method further comprises:
deleting, by the terminal device, all data in a buffer of the RLC entity corresponding to the at least one SRB.

5. The method according to claim 4, wherein all the data comprises at least one of:
all RLC SDUs, all RLC PDUs, or RLC SDU segments.

6. The method according to claim 4 or 5, further comprising:
resetting, by the terminal device, state information of the RLC entity corresponding to the at least one SRB.

7. The method according to claim 6, wherein the resetting, by the terminal device, the state information of the RLC entity corresponding to the at least one SRB comprises:
resetting, by the terminal device, a timer configured in the RLC entity corresponding to the at least one SRB, and/or initializing, by the terminal device, a state variable of the RLC entity corresponding to the at least one SRB.

8. A terminal device (500), comprising:
a communication unit (510) configured to receive a handover command that instructs the terminal device (500) to be handed over from a source cell to a target cell in a Dual Active Protocol Stack, DAPS, handover mode,
**characterized in that**, the terminal device (500) further comprises:
a processing unit (520) configured to perform, when the DAPS handover fails and no radio link failure in the source cell is detected:
triggering a Packet Data Convergence Protocol, PDCP, Service Data Unit, SDU, deletion process, and deleting all PDCP Protocol Data Units, PDUs, and PDCP SDUs of a PDCP entity corresponding to at least one Signaling Radio Bearer, SRB.

9. The terminal device (500) according to claim 8, wherein when the DAPS handover fails and no radio link failure in the source cell is detected, the processing unit (520) is configured further to perform at least one of:
instructing a PDCP layer corresponding to the at least one SRB of the source cell to suspend the PDCP entity; or
re-establishing a Radio Link Control (RLC) entity corresponding to the at least one SRB of the source cell.

10. The terminal device (500) according to claim 8 or 9, wherein the processing unit (520) is further configured to resume the at least one SRB of the source cell.

11. The terminal device (500) according to any one of claims 8 to 10, wherein when the terminal device instructs the PDCP layer corresponding to the at least one SRB of the source cell to suspend the PDCP entity, the processing unit (520) is configured further to perform deleting all PDCP PDUs and/or PDCP SDUs of the PDCP entity corresponding to the at least one SRB;
and/or,
when the terminal device re-establishes the RLC entity corresponding to the at least one SRB, the processing unit (520) is configured further to perform deleting all data in a buffer of the RLC entity corresponding to the at least one SRB.

12. The terminal device (500) according to claim 11, wherein all the data comprises at least one of:
all RLC SDUs, all RLC PDUs, or RLC SDU segments.

13. The terminal device (500) according to claim 11 or 12, wherein the processing unit (520) is further configured to reset state information of the RLC entity corresponding to the at least one SRB.

14. The terminal device (500) according to claim 13, wherein the processing unit (520) is configured to:
reset a timer configured in the RLC entity corresponding to the at least one SRB, and/or initialize a state variable of the RLC entity corresponding to the at least one SRB.

15. A chip, comprising a processor configured to invoke and execute a computer program from a memory, to cause a device provided with the chip to perform the method according to any of claims 1 to 7.
